# EUROPEAN PATENT APPLICATION

(11) **EP 4 549 837 A1**
(43) Date of publication of application: **07.05.2025**
(21) Application number: 23871507.2
(22) Date of filing: 09.08.2023
(51) Int. Cl.: F25B 5/02, F25D 11/00, F25D 21/06, F25B 1/00, F25B 47/02, B60P 3/20

(54) **REFRIGERATION DEVICE**

(30) Priority: 30.09.2022 JP 2022157408
(71) Applicant: DAIKIN INDUSTRIES, LTD., Osaka-shi, Osaka 530-0001 (JP)
(72) Inventor: SOMEKAWA, Kazuma, Osaka-shi, Osaka 530-0001 (JP); HIBINO, Hiroshi, Osaka-shi, Osaka 530-0001 (JP); MORISHIMA, Akichika, Osaka-shi, Osaka 530-0001 (JP)
(74) Representative: Hoffmann Eitle
(86) International application number: PCT/JP2023/029137
(87) International publication number: WO 2024/070265

(57) **Abstract**

A control device (60) is configured to control a second expansion mechanism (33) and a pressure regulating mechanism (34) to avoid frosting of a second utilization-side heat exchanger (31) under operating conditions in which a heat-source-side heat exchanger (13) functions as a radiator, a first utilization-side heat exchanger (21) and the second utilization-side heat exchanger (31) function as evaporators, and the first utilization-side heat exchanger (21) is possibly frosted.

## Description

### TECHNICAL FIELD

The present disclosure relates to a refrigeration apparatus.

### BACKGROUND ART

Patent Document 1 discloses a refrigeration apparatus for transportation. The refrigeration apparatus includes a refrigerant circuit including a compressor, a condenser, an expansion valve, and an evaporator, and a secondary battery (battery) serving as a power source of the refrigeration apparatus.

### CITATION LIST

### PATENT DOCUMENT

Patent Document 1: Japanese Unexamined Patent Publication No. 2010-188940

### SUMMARY OF THE INVENTION

### TECHNICAL PROBLEM

The inventors of the present application have created a refrigeration apparatus configured to control a battery temperature. Specifically, a first utilization-side heat exchanger and a second utilization-side heat exchanger are provided in parallel in the refrigerant circuit. The first utilization-side heat exchanger functioning as an evaporator cools a first object, and simultaneously, the second utilization-side heat exchanger also functioning as an evaporator adjusts the temperature of a second object.

During this operation, an operating condition in which the first utilization-side heat exchanger may be frosted may be met. Under this operating condition, the first utilization-side heat exchanger operates at a relatively low evaporation temperature, and thus, the second utilization-side heat exchanger also operates at a low evaporation temperature. As a result, frost is formed not only on the first utilization-side heat exchanger but also on the second utilization-side heat exchanger, which adversely affects the second object.

An object of the present disclosure is to provide a refrigeration apparatus that can reduce frosting of the second utilization-side heat exchanger.

### SOLUTION TO THE PROBLEM

A refrigeration apparatus of a first aspect includes a refrigerant circuit (R) and a control device (60). The refrigerant circuit (R) includes: a compressor (12); a heat-source-side heat exchanger (13) provided in series with the compressor (12); a first refrigerant channel (P1) provided in series with the compressor (12) and the heat-source-side heat exchanger (13) and including a first expansion mechanism (23) and a first utilization-side heat exchanger (21); and a second refrigerant channel (P2) provided in parallel with the first refrigerant channel (P1) and including a second expansion mechanism (33), a second utilization-side heat exchanger (31), and a pressure regulating mechanism (34).

The control device (60) is configured to control the second expansion mechanism (33) and the pressure regulating mechanism (34) to avoid frosting of the second utilization-side heat exchanger (31) under operating conditions in which the heat-source-side heat exchanger (13) functions as a radiator, the first utilization-side heat exchanger (21) and the second utilization-side heat exchanger (31) function as evaporators, and the first utilization-side heat exchanger (21) is possibly frosted.

According to the first aspect, the control device (60) controls the second expansion mechanism (33) and the pressure regulating mechanism (34) under the operating condition in which the first utilization-side heat exchanger (21) may be frosted. It is therefore possible to adjust the evaporation temperature of the first utilization-side heat exchanger (21) and the evaporation temperature of the second utilization-side heat exchanger (31) individually and reduce the frosting of the second utilization-side heat exchanger (31).

A second aspect is an embodiment of the first aspect. In the second aspect, the second utilization-side heat exchanger (31) adjusts a temperature of a battery (B).

Frosting of the second utilization-side heat exchanger (31) makes it difficult for the second utilization-side heat exchanger (31) to keep the temperature of the battery (B) at a predetermined temperature. According to the second aspect, it is possible to reduce the frosting of the second utilization-side heat exchanger (31) and therefore possible to control the temperature of the battery (B) with reliability.

A third aspect is an embodiment of the first or second aspect. In the third aspect, the first utilization-side heat exchanger (21) cools air in a storage.

According to the third aspect, since the first utilization-side heat exchanger (21) cools the air in the storage, the evaporation temperature of the first utilization-side heat exchanger (21) tends to be relatively low, resulting in easy frosting of the first utilization-side heat exchanger (21). To address this, the control device (60) controls the second expansion mechanism (33) and the pressure regulating mechanism (34) to avoid the frosting of the second utilization-side heat exchanger (31), making it possible to perform an operation of reducing the frosting of the second utilization-side heat exchanger (31) while the first utilization-side heat exchanger (21) keeps the temperature in the storage low.

A fourth aspect is an embodiment of any one of the first to third aspects. In the fourth aspect, the control device (60) is configured to control the refrigerant circuit (R) to perform a defrosting operation of melting frost on the first utilization-side heat exchanger (21) with a refrigerant in the refrigerant circuit (R), and the refrigerant circuit (R) is configured to keep the refrigerant from flowing through the second utilization-side heat exchanger (31) in the defrosting operation.

According to the fourth aspect, the refrigerant circuit (R) keeps the refrigerant from flowing through the second utilization-side heat exchanger (31) in the defrosting operation of melting the frost on the first utilization-side heat exchanger (21). This can keep the refrigerant from increasing the temperature of the second utilization-side heat exchanger (31) and thus can reduce a temperature increase of an object for which the temperature is controlled by the second utilization-side heat exchanger (31).

A fifth aspect is an embodiment of the fourth aspect. In the fifth aspect, the control device (60) is configured to control the refrigerant circuit (R) to perform, as the defrosting operation, a first operation, a second operation, or a third operation.

The first operation is an operation which allows a high-pressure refrigerant discharged from the compressor (12) to bypass the heat-source-side heat exchanger (13) and flow into the first utilization-side heat exchanger (21). The second operation is an operation which allows the high-pressure refrigerant discharged from the compressor (12) to dissipate heat in the first utilization-side heat exchanger (21) and evaporate in the heat-source-side heat exchanger (13). The third operation is an operation which allows the high-pressure refrigerant discharged from the compressor (12) to flow through the heat-source-side heat exchanger (13) for which a corresponding fan (14) is stopped, and through the first utilization-side heat exchanger (21) in this order.

A sixth aspect is an embodiment of the fifth aspect. In the sixth aspect, the refrigerant circuit (R) includes a bypass channel (36) having one end connected to a discharge side of the compressor (12) and the other end connected to the first refrigerant channel (P1) between the first expansion mechanism (23) and the first utilization-side heat exchanger (21), the bypass channel (36) allowing the high-pressure refrigerant discharged from the compressor (12) to flow during the first operation.

According to the sixth aspect, the high-pressure refrigerant discharged from the compressor (12) flows through the first utilization-side heat exchanger (21) via the bypass channel (36) during the first operation performed as the defrosting operation. Thus, the frost on the first utilization-side heat exchanger (21) can be melted with the high-pressure refrigerant.

A seventh aspect is an embodiment of the sixth aspect. In the seventh aspect, the first refrigerant channel (P1) is provided with a check valve (39) arranged between a junction of the bypass channel (36) and the first refrigerant channel (P1) and a branch point (17) of the first refrigerant channel (P1) and the second refrigerant channel (P2) to block the refrigerant from flowing from the junction to the branch point (17).

According to the seventh aspect, the check valve (39) can reduce the flow of the refrigerant that has flowed out of the bypass channel (36), into the second refrigerant channel (P2) in the first operation. This can keep the high-pressure refrigerant from flowing into the second utilization-side heat exchanger (31) in the defrosting operation.

An eighth aspect is an embodiment of any one of the fourth to seventh aspects. In the eighth aspect, the control device (60) is configured to reduce an opening degree of a second expansion valve (33) serving as the second expansion mechanism (33) in the defrosting operation. To "reduce an opening degree of the second expansion valve" used herein includes setting the opening degree of the second expansion valve (33) to zero, that is, fully closing the second expansion valve (33).

According to the eighth aspect, the opening degree of the second expansion valve (33) is reduced in the defrosting operation, which makes it possible to keep the refrigerant from flowing through the second utilization-side heat exchanger (31).

A ninth aspect is an embodiment of any one of the fourth to eighth aspects. In the ninth aspect, the control device (60) is configured to reduce an opening degree of a pressure regulating valve (34) serving as the pressure regulating mechanism in the defrosting operation. To "reduce an opening degree of the pressure regulating valve" used herein includes setting the opening degree of the pressure regulating valve (34) to zero, that is, fully closing the pressure regulating valve (34).

According to the ninth aspect, the opening degree of the pressure regulating valve (34) is reduced in the defrosting operation, which makes it possible to keep the refrigerant from flowing through the second utilization-side heat exchanger (31).

A tenth aspect is an embodiment of any one of the first to ninth aspects. In the tenth aspect, the first expansion mechanism (23) is any one of an electronic expansion valve, a thermal expansion valve, or a capillary tube.

### BRIEF DESCRIPTION OF THE DRAWINGS

FIG. 1 is a schematic configuration diagram of a vehicle and a refrigeration apparatus according to an embodiment.
FIG. 2 is a schematic configuration diagram of a refrigerant circuit of the refrigeration apparatus according to the embodiment.
FIG. 3 is a block diagram of main components of the refrigeration apparatus according to the embodiment.
FIG. 4 is a control flowchart of the refrigeration apparatus according to the embodiment.
FIG. 5 is a schematic configuration diagram of a refrigerant circuit of a refrigeration apparatus according to a first variation.
FIG. 6 is a schematic configuration diagram of a refrigerant circuit of a refrigeration apparatus according to a second variation.
FIG. 7 is a schematic configuration diagram of a refrigerant circuit of a refrigeration apparatus according to a third variation.
FIG. 8 is a schematic configuration diagram of a refrigerant circuit of a refrigeration apparatus according to a fourth variation.

### DESCRIPTION OF EMBODIMENTS

Embodiments of the present disclosure will be described in detail below with reference to the drawings. The present disclosure is not limited to the embodiments shown below, and various changes can be made within the scope without departing from the technical concept of the present disclosure. Since each of the drawings is intended to illustrate the present disclosure conceptually, dimensions, ratios, or numbers may be exaggerated or simplified as necessary for the sake of ease of understanding.

### (1) Vehicle

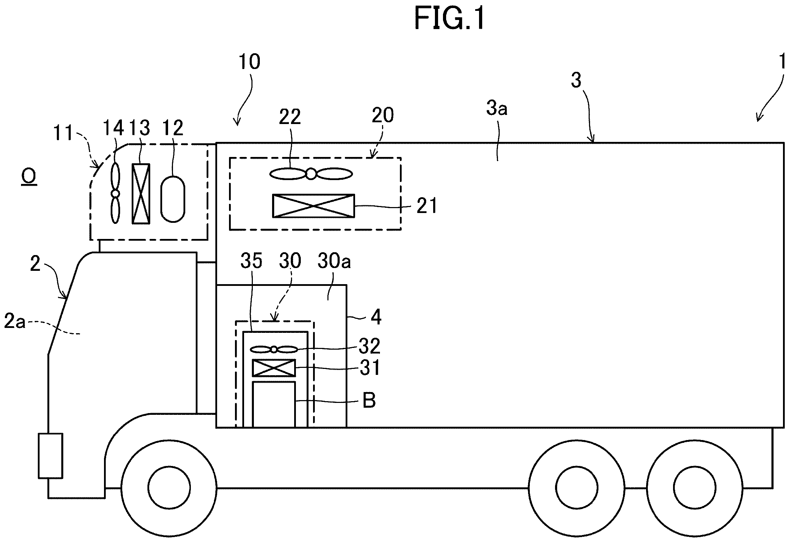

As illustrated in FIG. 1, a vehicle (1) according to the embodiment is a truck. The vehicle (1) is a refrigerated vehicle having a cabin (2) and a cold storage (3) provided behind the cabin (2). A driver's cab (2a) is formed in the cabin (2). A cargo area (3a) is formed in the cold storage (3). The cargo area (3a) stores objects such as food. The vehicle (1) includes a refrigeration apparatus (10) for cooling the air in the cold storage (3).

### (2) General Configuration of Refrigeration Apparatus

The refrigeration apparatus (10) of this embodiment includes a battery (B) and uses the battery (B) as a drive source. The refrigeration apparatus (10) includes a refrigerant circuit (R) filled with a refrigerant. The refrigerant circuit (R) performs a vapor compression refrigeration cycle. The refrigeration apparatus (10) includes a first unit (11), a second unit (20), and a third unit (30). The first unit (11) is arranged above the cabin (2). The first unit (11) constitutes a heat source unit located in an outdoor space (O). The second unit (20) is arranged in the cargo area (3a). The second unit (20) constitutes a cooling unit. The third unit (30) is arranged in a battery chamber (30a) partitioned from the cargo area (3a) by a partitioning member (4). The third unit (30) constitutes a battery temperature control unit.

The first unit (11) includes a compressor (12), an outdoor heat exchanger (13), and an outdoor fan (14). The second unit (20) includes an internal heat exchanger (21) and an internal fan (22). The third unit (30) includes a battery (B), a battery-side heat exchanger (31), and a battery-side fan (32). The third unit (30) may have no battery-side fan (32).

### (2-1) Configuration of Refrigerant Circuit

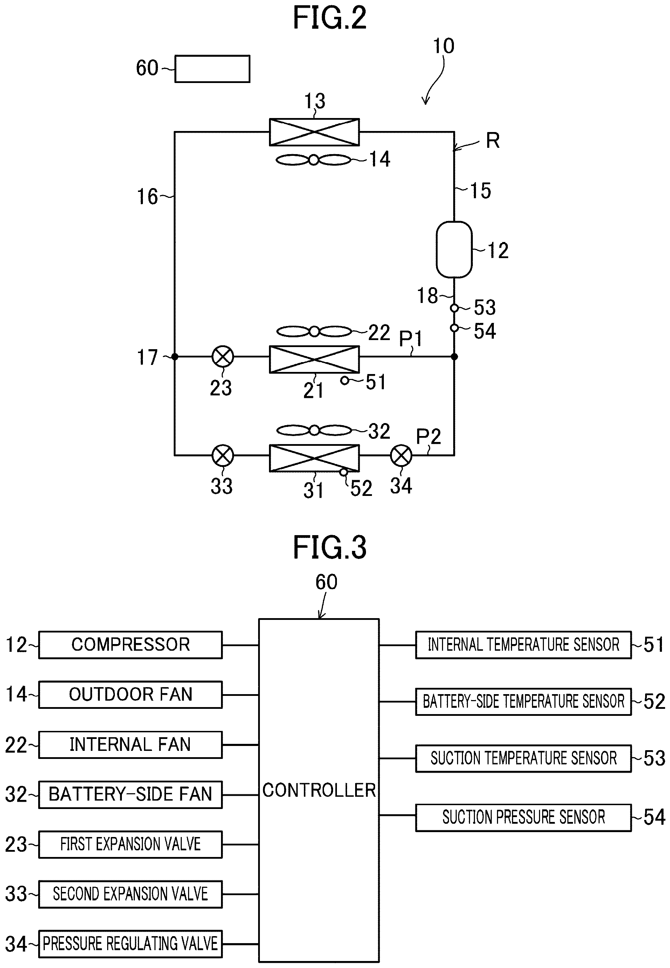

As illustrated in FIG. 2, the refrigerant circuit (R) includes the compressor (12), the outdoor heat exchanger (13), the internal heat exchanger (21), and the battery-side heat exchanger (31) as main components. The refrigerant circuit (R) includes a first expansion valve (23), a second expansion valve (33), and a pressure regulating valve (34).

The compressor (12) sucks and compresses a refrigerant and discharges the compressed refrigerant. The compressor (12) is, for example, a scroll compressor, a rotary compressor, or a swing piston compressor. The compressor (12) is connected in series to a gas end of the outdoor heat exchanger (13) via a discharge pipe (15).

The outdoor heat exchanger (13) is an example of a heat-source-side heat exchanger. The outdoor heat exchanger (13) is placed in the outdoor space (O) or in a flow path through which outdoor air flows. The outdoor heat exchanger (13) exchanges heat between the outdoor air and the refrigerant. The outdoor heat exchanger (13) is a fin-and-tube heat exchanger. A liquid end of the outdoor heat exchanger (13) is connected to a first pipe (P1) and a second pipe (P2) through a main liquid pipe (16).

The outdoor fan (14) is arranged near the outdoor heat exchanger (13). The outdoor fan (14) conveys the outdoor air so that the outdoor air flows through the outdoor heat exchanger (13).

The first pipe (P1) and the second pipe (P2) are connected in parallel to each other in the refrigerant circuit (R). One end of the first pipe (P1) and one end of the second pipe (P2) are connected to a branch point (17) which is an end of the main liquid pipe (16). The other end of the first pipe (P1) and the other end of the second pipe (P2) are connected to a suction pipe (18) of the compressor (12). The first pipe (P1) is an example of a first refrigerant channel. The second pipe (P2) is an example of a second refrigerant channel.

The first expansion valve (23) and the internal heat exchanger (21) are connected to the first pipe (P1) in this order from the liquid side to the gas side. The first expansion valve (23) is an example of a first expansion mechanism. The first expansion valve (23) is configured by an electronic expansion valve having an adjustable opening degree.

The internal heat exchanger (21) is an example of a first utilization-side heat exchanger. The internal heat exchanger (21) is placed in the cargo area (3a). The internal heat exchanger (21) exchanges heat between the air in the cargo area (3a) and the refrigerant. The internal heat exchanger (21) is a fin-and-tube heat exchanger.

The internal fan (22) is arranged near the internal heat exchanger (21). The internal fan (22) conveys the air in the cargo area (3a) so that the air in the cargo area (3a) flows through the internal heat exchanger (21).

The second expansion valve (33), the battery-side heat exchanger (31), and the pressure regulating valve (34) are connected to the second pipe (P2) in this order from the liquid side to the gas side. The second expansion valve (33) is an example of a second expansion mechanism. The second expansion valve (33) is configured by an electronic expansion valve having an adjustable opening degree. The pressure regulating valve (34) is an example of a pressure regulating mechanism that regulates the evaporation pressure of the battery-side heat exchanger (31). The pressure regulating valve (34) is configured by an electronic expansion valve, for example.

The battery-side heat exchanger (31) is an example of a second utilization-side heat exchanger. The battery-side heat exchanger (31) is placed in a casing (35) of the third unit (30). The battery-side heat exchanger (31) exchanges heat between the air conveyed by the battery-side fan (32) and the refrigerant. The battery-side fan (32) may be omitted, and the battery-side heat exchanger (31) and the battery (B) may be in contact with each other. In this case, heat is exchanged directly between the battery-side heat exchanger (31) and the battery (B) without passing through the air.

### (2-2) Details of Third Unit

The third unit (30) of the present embodiment is arranged in the battery chamber (30a). The third unit (30) includes a casing (35). The casing (35) is formed in a hollow box shape. The casing (35) is made of a heat insulating material. The casing (35) houses the battery (B), the battery-side heat exchanger (31), and the battery-side fan (32). The battery-side heat exchanger (31) may be arranged away from the battery (B) or may be arranged in contact with the battery (B).

The battery (B) functions as a power source for the refrigeration apparatus (10). The battery (B) supplies electric power to the compressor (12), the outdoor fan (14), the internal fan (22), and the battery-side fan (32). The battery (B) supplies the electric power to the first expansion valve (23), the second expansion valve (33), the pressure regulating valve (34), and various sensors (which will be described in detail later).

The battery (B) is, for example, a lithium ion battery. The battery (B) is required to maintain its temperature within an appropriate temperature range. The temperature range is from 10°C to 30°C, for example. In particular, the temperature control is significantly necessary for the lithium ion battery. If the temperature of the battery (B) is too low, its charge/discharge characteristics will deteriorate. If the temperature of the battery (B) is high, the battery (B) will deteriorate faster.

### (2-3) Sensors

The refrigeration apparatus (10) has a plurality of sensors. The sensors include an internal temperature sensor (51), a battery-side temperature sensor (52), a suction temperature sensor (53), and a suction pressure sensor (54).

The internal temperature sensor (51) is arranged in the cargo area (3a) and detects the temperature of the air in the cold storage (3). The battery-side temperature sensor (52) is attached to a surface of the battery-side heat exchanger (31). The battery-side temperature sensor (52) detects the temperature of the surface of the battery-side heat exchanger (31).

The suction temperature sensor (53) is provided in the suction pipe (18). The suction temperature sensor (53) detects the temperature of the refrigerant to be sucked into the compressor (12). The suction pressure sensor (54) detects the pressure of the refrigerant to be sucked into the compressor (12). The suction temperature sensor (53) and the suction pressure sensor (54) constitute a superheat detector for determining the degree of superheat of the refrigerant that has flowed out of the internal heat exchanger (21).

### (2-4) Controller

As illustrated in FIGS. 2 and 3, the refrigeration apparatus (10) includes a controller (60). The controller (60) includes a microcomputer mounted on a control board and a memory device (specifically, a semiconductor memory) that stores software for operating the microcomputer.

The controller (60) controls the refrigerant circuit (R). Specifically, the controller (60) controls the ON/OFF of the compressor (12) and the number of rotations of the compressor (12). The controller (60) controls the ON/OFF of the outdoor fan (14), the internal fan (22), and the battery-side fan (32). The controller (60) controls the numbers of rotations of the outdoor fan (14), the internal fan (22), and the battery-side fan (32). The controller (60) controls the opening degrees of the first expansion valve (23), the second expansion valve (33), and the pressure regulating valve (34).

The controller (60) determines the degree of superheat of the refrigerant that has flowed out of the internal heat exchanger (21) based on the values detected by the suction temperature sensor (53) and the suction pressure sensor (54). The degree of superheat is a value obtained by subtracting a saturation temperature corresponding to the pressure detected by the suction pressure sensor (54) from the temperature detected by the suction temperature sensor (53).

The controller (60) controls the second expansion valve (33) and the pressure regulating valve (34) to avoid frosting of the battery-side heat exchanger (31) under an operating condition in which the internal heat exchanger (21) may be frosted. Details of this control will be described later.

### (3) Operation

Basic operation of the refrigeration apparatus (10) will be described with reference to FIG. 2.

When the refrigeration apparatus is in operation, the controller (60) operates the compressor (12), the outdoor fan (14), the internal fan (22), and the battery-side fan (32). The controller (60) adjusts the opening degrees of the first expansion valve (23) and the second expansion valve (33).

The refrigerant compressed by the compressor (12) flows through the outdoor heat exchanger (13). The refrigerant dissipates heat to the outdoor air in the outdoor heat exchanger (13) to condense. The condensed refrigerant flows through the main liquid pipe (16) and is diverted into the first pipe (P1) and the second pipe (P2).

The refrigerant that has flowed into the first pipe (P1) is decompressed by the first expansion valve (23), and then flows through the internal heat exchanger (21). In the internal heat exchanger (21), the refrigerant absorbs heat from the air in the cargo area (3a) to evaporate. The air in the cargo area (3a) is cooled by the internal heat exchanger (21).

The refrigerant that has flowed into the second pipe (P2) is decompressed by the second expansion valve (33), and then flows through the battery-side heat exchanger (31). In the battery-side heat exchanger (31), the refrigerant absorbs heat from the air in the casing (35) to evaporate. The air in the casing (35) is cooled by the battery-side heat exchanger (31). Thus, the temperature of the battery (B) is adjusted to a predetermined temperature.

The refrigerant evaporated in the internal heat exchanger (21) and the refrigerant evaporated in the battery-side heat exchanger (31) are sucked into the compressor (12) through the suction pipe (18) and compressed again.

### (4) Features

### (4-1) Problems

When the refrigeration apparatus (10) is in operation, as described above, the internal heat exchanger (21) cools the interior of the storage, and simultaneously, the battery-side heat exchanger (31) adjusts the temperature of the battery (B). The internal heat exchanger (21) is provided in the cold storage (3) such as a refrigerator or a freezer, and cools the air in the storage to a relatively low temperature. Thus, in the operation described above, an operating condition in which the internal heat exchanger (21) may be frosted may be met. Specifically, the internal heat exchanger (21) may be operated at an evaporation temperature of 0°C or lower. Thus, under the operating conditions in which the outdoor heat exchanger (13) functions as a radiator (condenser), the internal heat exchanger (21) and the battery-side heat exchanger (31) function as evaporators, and the internal heat exchanger (21) may be frosted, a problem arises that the evaporation temperature of the battery-side heat exchanger (31) is also 0°C or lower and the battery-side heat exchanger (31) is frosted.

If the frost covers the surface of the battery-side heat exchanger (31), the battery-side heat exchanger (31) deteriorates in heat exchange performance. As a result, the temperature of the battery (B) cannot be adjusted to a predetermined temperature, impairing the performance of the battery (B).

Although measures for defrosting the battery-side heat exchanger (31) can be taken as a solution to this problem, such measures complicate the structure and control of the refrigeration apparatus.

If some measure is taken to heat the battery-side heat exchanger (31), the temperature of the battery (B) increases. This may shorten the life of the battery (B), increase the frequency of replacement of the battery (B), and impair the reliability of the refrigeration apparatus (10).

### (4-2) Control for Less Frosting of Battery-Side Heat Exchanger

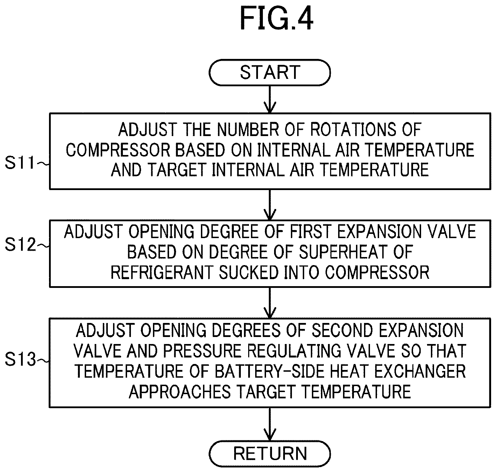

The control device (60) performs the following control to solve the above problem. This control will be described with reference to FIG. 4.

In step S11, the controller (60) adjusts the number of rotations of the compressor (12) based on an internal air temperature (Ti) and a target internal temperature (Tis). The internal air temperature (Ti) is detected by the internal temperature sensor (51). The target internal temperature (Tis) is determined according to an operating mode of the refrigeration apparatus, such as a refrigeration mode and a freezing mode, and a set temperature inputted by a user. The controller (60) adjusts the number of rotations of the compressor (12) based on, for example, a difference ΔT (= Ti - Tis) between the internal air temperature (Ti) and the target internal temperature (Tis). In other words, the controller (60) adjusts the number of rotations of the compressor (12) based on a cooling load of the storage. The controller (60) may adjust the number of rotations of the compressor (12) so that an evaporation temperature (Te1) of the internal heat exchanger (21) approaches a target evaporation temperature (Tes). In this case, the target evaporation temperature (Tes) is determined based on the internal air temperature (Ti) and the target internal temperature (Tis). The evaporation temperature (Te1) is, for example, a saturation temperature corresponding to the pressure detected by the suction pressure sensor (54).

In step S12, the controller (60) adjusts the opening degree of the first expansion valve (23). The opening degree of the first expansion valve (23) is adjusted in accordance with the degree of superheat (SH) of the refrigerant to be sucked into the compressor (12). Specifically, the controller (60) adjusts the opening degree of the first expansion valve (23) to maintain the degree of superheat (SH) at a target degree of superheat. The degree of superheat is obtained from the values detected by the suction temperature sensor (53) and the suction pressure sensor as described above.

In step S13, the controller (60) adjusts the opening degrees of the second expansion valve (33) and the pressure regulating valve (34). Specifically, the controller (60) adjusts the opening degrees of the second expansion valve (33) and the pressure regulating valve (34) so that the temperature of the battery-side heat exchanger (31) (battery temperature (Tb)) approaches a target battery temperature (Tbs). The battery temperature (Tb) is detected by the battery-side temperature sensor (52). The target battery temperature (Tbs) is an optimum temperature of the battery (B). The target battery temperature (Tbs) is a predetermined temperature higher than the temperature at which the battery-side heat exchanger (31) is frosted (e.g., 0°C). The target battery temperature (Tbs) is a predetermined temperature higher than the target internal temperature, and is set to, for example, 20°C.

In step S11 in FIG. 4, when the target internal temperature (Tis) is -5°C, for example, the evaporation temperature (Te1) of the internal heat exchanger (21) is a predetermined temperature lower than -5°C. In this case, the refrigeration apparatus (10) operates in a condition in which the internal heat exchanger (21) may be frosted. However, in step S13, the controller (60) controls the opening degrees of the second expansion valve (33) and the pressure regulating valve (34) so that the battery temperature (Tb) approaches the target battery temperature (Tbs). The target battery temperature (Tbs) is higher than the temperature at which the battery-side heat exchanger (31) is frosted. Thus, in this embodiment, the frosting of the battery-side heat exchanger (31) can be reduced under the operating condition in which the internal heat exchanger (21) may be frosted.

In step 13, the controller (60), for example, adjusts the opening degree of the second expansion valve (33) so that the degree of superheat of the refrigerant that has flowed out of the battery-side heat exchanger (31) reaches a predetermined target value. At the same time, the controller (60) adjusts the opening degree of the pressure regulating valve (34) so that the target battery temperature (Tbs) reaches the target battery temperature (Tb).

### (4-3) Advantages of Embodiment

In the above embodiment, the controller (60) controls the opening degrees of the second expansion valve (33) and the pressure regulating valve (34) to avoid the frosting of the battery-side heat exchanger (31) under the operating conditions in which the outdoor heat exchanger (13) functions as a radiator, the internal heat exchanger (21) and the battery-side heat exchanger (31) function as evaporators, and the internal heat exchanger (21) may be frosted.

Thus, the internal heat exchanger (21) can cool the air in the storage to a low temperature and can reduce the frosting of the battery-side heat exchanger (31). This allows the battery-side heat exchanger (31) to adjust the temperature of the battery (B) to a desired temperature, maintaining the performance of the battery (B).

Moreover, this requires no means for defrosting the battery-side heat exchanger (31); therefore, the refrigeration apparatus (10) can be simplified, and cost can be reduced. In addition, since it is possible to keep the temperature of the battery-side heat exchanger (31) from increasing due to the defrosting, it is possible to avoid shortening of the life of the battery (B) caused by the temperature increase of the battery-side heat exchanger (31). As a result, the reliability of the refrigeration apparatus (10) can be ensured.

### (5) Variations of Embodiment

The above-described embodiment may be modified as follows. In the following description, differences from the embodiment will be described.

### (5-1) First Variation

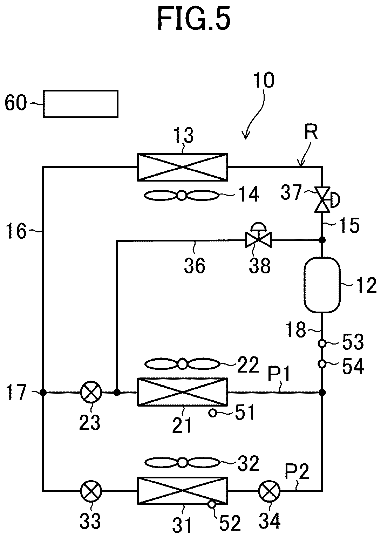

A refrigeration apparatus (10) of the first variation shown in FIG. 5 includes a bypass channel (36) added to the refrigerant circuit (R) of the embodiment. The bypass channel (36) is a flow path that allows a high-pressure refrigerant discharged from the compressor (12) to bypass the outdoor heat exchanger (13) and flow into the internal heat exchanger (21).

One end of the bypass channel (36) is connected to the discharge pipe (15). The other end of the bypass channel (36) of the first variation is connected to the first pipe (P1). Specifically, the other end of the bypass channel (36) is connected between the first expansion valve (23) and the internal heat exchanger (21).

The refrigerant circuit (R) has a first on-off valve (37) and a second on-off valve (38). The first on-off valve (37) is provided in a gas line between the compressor (12) and the outdoor heat exchanger (13). Specifically, the first on-off valve (37) is provided between the junction of the gas line and the bypass channel (36) and the gas end of the outdoor heat exchanger (13). The second on-off valve (38) is provided in the bypass channel (36). The first on-off valve (37) and the second on-off valve (38) are each configured by an electromagnetic on-off valve. The first on-off valve (37) and the second on-off valve (38) constitute a switching mechanism that allows switching between a flow path for sending the high-pressure refrigerant discharged from the compressor (12) to the outdoor heat exchanger (13) and a flow path for sending the high-pressure refrigerant discharged from the compressor (12) to the bypass channel (36). The switching mechanism may be, for example, a three-way valve.

The refrigeration apparatus (10) of the first variation performs a defrosting operation of melting frost on the internal heat exchanger (21). The refrigeration apparatus (10) of the first variation performs a first operation as the defrosting operation. The first operation is an operation which allows the high-pressure refrigerant discharged from the compressor (12) to bypass the outdoor heat exchanger (13) and flow into the internal heat exchanger (21). The first operation is a so-called hot gas defrosting operation.

When the refrigeration apparatus (10) is in normal operation, the controller (60) opens the first on-off valve (37) and closes the second on-off valve (38). Thus, the refrigerant circuit (R) performs the refrigeration cycle similar to that of the above-described embodiment.

When the refrigeration apparatus (10) performs the defrosting operation (first operation), the controller (60) closes the first on-off valve (37) and opens the second on-off valve (38). The controller (60) operates the compressor (12) and the internal fan (22) and stops the outdoor fan (14) and the battery-side fan (32). The controller (60) closes the first expansion valve (23), the second expansion valve (33), and the pressure regulating valve (34).

In the first operation, the refrigerant discharged from the compressor (12) flows through the bypass channel (36) and the internal heat exchanger (21). In the internal heat exchanger (21), the high-pressure refrigerant dissipates heat to the surface of the internal heat exchanger (21). This melts the frost on the surface of the internal heat exchanger (21). The refrigerant that has passed through the internal heat exchanger (21) is sucked into the compressor (12).

The refrigerant circuit (R) of the first variation is configured to keep the refrigerant from flowing into the battery-side heat exchanger (31) in the defrosting operation (first operation). Specifically, the refrigerant circuit (R) keeps the refrigerant from flowing into the battery-side heat exchanger (31) by the following configurations 1) to 4).

1) The other end of the bypass channel (36) is connected to the first pipe (P1). For example, connecting the other end of the first pipe (P1) to the main liquid pipe (16) makes the high-pressure refrigerant flow into the second pipe (P2) easily. However, connecting the other end of the bypass channel (36) to the first pipe (P1) can keep the high-pressure refrigerant from flowing into the second pipe (P2).
2) The refrigerant circuit (R) has the first expansion valve (23) whose opening degree is reduced in the defrosting operation. Reducing the opening degree of the first expansion valve (23) can keep the refrigerant that has flowed through the bypass channel (36) from flowing from the first pipe (P1) to the second pipe (P2). In the defrosting operation, the controller (60) may fully close the first expansion valve (23) or may reduce the opening degree of the first expansion valve (23) to a predetermined opening degree larger than zero.
3) The refrigerant circuit (R) has the second expansion valve (33) whose opening degree is reduced in the defrosting operation. Reducing the opening degree of the second expansion valve (33) can keep the refrigerant that has flowed through the bypass channel (36) from flowing from the first pipe (P1) to the second pipe (P2). In the defrosting operation, the controller (60) may fully close the second expansion valve (33) or may reduce the opening degree of the second expansion valve (33) to a predetermined opening degree larger than zero.
4) The refrigerant circuit (R) has the pressure regulating valve (34) whose opening degree is reduced in the defrosting operation. Reducing the opening degree of the pressure regulating valve (34) can keep the refrigerant that has flowed through the first pipe (P1) from flowing into the second pipe (P2). In the defrosting operation, the controller (60) may fully close the pressure regulating valve (34) or may reduce the opening degree of the pressure regulating valve (34) to a predetermined opening degree larger than zero.

The refrigerant circuit (R) adopts at least one of the above configurations 1) to 4).

The controller (60) preferably reduces the opening degree of the first expansion valve (23), the second expansion valve (33), or the pressure regulating valve (34) immediately before the compressor (12) is operated. This can keep the refrigerant discharged from the compressor (12) from flowing into the battery-side heat exchanger (31).

If the high-pressure refrigerant flows through the battery-side heat exchanger (31) in the defrosting operation, the temperature of the battery (B) increases, and the life of the battery (B) is shortened. In the first variation, however, the high-pressure refrigerant can be kept from flowing into the battery-side heat exchanger (31) in the defrosting operation by at least one of the flow reducers 1) to 4). This can extend the life of the battery (B), ensuring the reliability of the refrigeration apparatus (10).

### (5-2) Second Variation

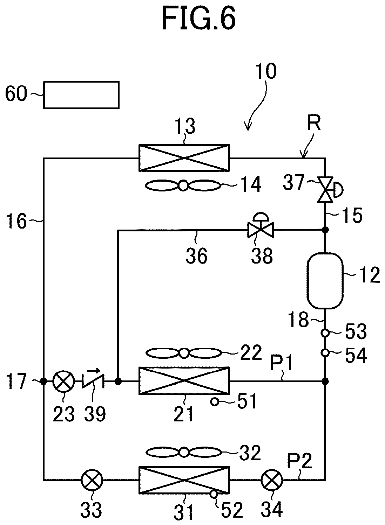

A refrigeration apparatus (10) of the second variation shown in FIG. 6 includes a check valve (39) added to the first pipe (P1) of the first variation. The check valve (39) is arranged between a junction of the bypass channel (36) and the first pipe (P1) and the branch point (17) of the first pipe (P1) and the second pipe (P2). The check valve (39) blocks the flow of the refrigerant from the junction of the bypass channel (36) and the first pipe (P1) to the branch point (17). The check valve (39) allows the refrigerant to flow from the branch point (17) to the junction of the bypass channel (36) and the first pipe (P1).

The check valve (39) is a flow reducer that reduces the flow of the high-pressure refrigerant into the battery-side heat exchanger (31) in the defrosting operation. Specifically, in the first operation, the check valve (39) blocks the refrigerant that has flowed out of the bypass channel (36) from flowing toward the second pipe (P2). This can reliably keep the temperature of the battery-side heat exchanger (31) from increasing due to the defrosting operation.

### (5-3) Third Variation

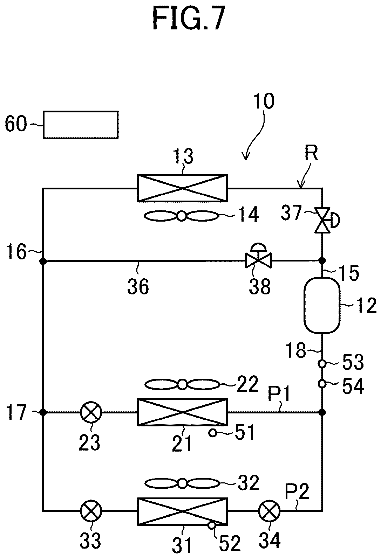

A refrigeration apparatus (10) of the third variation shown in FIG. 7 includes a bypass channel (36) with the other end connected to a different part from the first variation. Specifically, the other end of the bypass channel (36) is connected to the main liquid pipe (16). In the defrosting operation (first operation), the controller (60) opens the first expansion valve (23) at a predetermined opening degree (e.g., at the maximum opening degree) and fully closes the second expansion valve (33). The high-pressure refrigerant discharged from the compressor (12) passes through the bypass channel (36) and the first expansion valve (23), and then flows through the internal heat exchanger (21). The refrigerant melts the frost on the surface of the internal heat exchanger (21). The refrigerant that has flowed through the internal heat exchanger (21) is sucked into the compressor (12).

In the third variation, the controller (60) closes the second expansion valve (33) and the pressure regulating valve (34), keeping the high-pressure refrigerant from flowing into the battery-side heat exchanger (31).

### (5-4) Fourth Variation

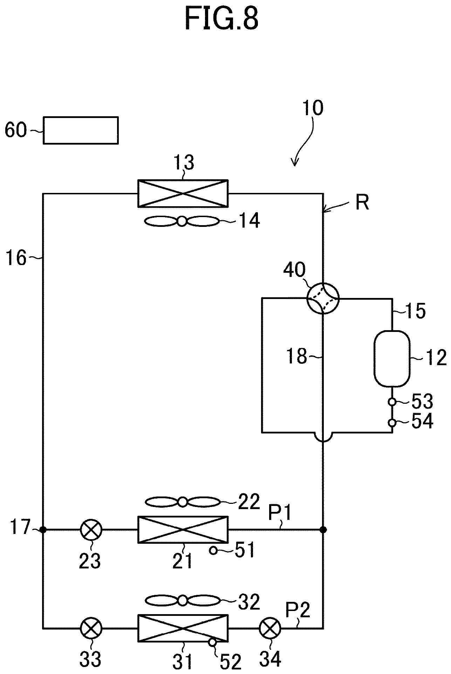

A refrigeration apparatus (10) of a fourth variation shown in FIG. 8 includes a four-way switching valve (40) added to the refrigerant circuit (R) of the embodiment. The four-way switching valve (40) is a flow channel switching mechanism that allows switching between a regular cycle and a reverse cycle of the refrigerant circuit (R). The regular cycle corresponds to a refrigeration cycle during the normal operation of the above-described embodiment. The reverse cycle corresponds to a refrigeration cycle during a second operation of the defrosting operation, which will be described in detail later. The four-way switching valve (40) is switched to a first state (the state indicated by the solid curves in FIG. 8) in the regular cycle and a second state (the state indicated by the broken curves in FIG. 8) in the reverse cycle.

When the four-way switching valve (40) is in the first state, the discharge pipe (15) of the compressor (12) communicates with the gas end side of the outdoor heat exchanger (13), and the suction pipe (18) of the compressor (12) communicates with the gas end side of the internal heat exchanger (21) and the gas end side of the battery-side heat exchanger (31). When the four-way switching valve (40) is in the second state, the discharge pipe (15) of the compressor (12) communicates with the gas end side of the internal heat exchanger (21) and the gas end side of the battery-side heat exchanger (31), and the suction pipe (18) of the compressor (12) communicates with the gas end side of the outdoor heat exchanger (13).

In the fourth variation, the controller (60) controls the refrigerant circuit (R) so that the second operation as the defrosting operation is performed, in which the high-pressure refrigerant discharged from the compressor (12) dissipates heat in the internal heat exchanger (21) and is evaporated in the outdoor heat exchanger (13). The second operation is a so-called reverse cycle defrosting operation.

When the refrigeration apparatus (10) performs the defrosting operation (second operation), the controller (60) sets the four-way switching valve (40) to the second state. The controller (60) operates the compressor (12), the outdoor fan (14), and the internal fan (22), and stops the battery-side fan (32). The controller (60) adjusts the opening degree of the first expansion valve (23) appropriately. The controller (60) closes the second expansion valve (33) and the pressure regulating valve (34).

In the second operation, the refrigerant discharged from the compressor (12) flows through the internal heat exchanger (21). In the internal heat exchanger (21), the high-pressure refrigerant dissipates heat to the surface of the internal heat exchanger (21). This melts the frost on the surface of the internal heat exchanger (21). The refrigerant that has passed through the internal heat exchanger (21) is decompressed by the first expansion valve (23), and then flows through the outdoor heat exchanger (13). In the outdoor heat exchanger (13), the refrigerant absorbs heat from the outdoor air to evaporate. The refrigerant that has passed through the outdoor heat exchanger (13) is sucked into the compressor (12).

The refrigerant circuit (R) of the fourth variation is configured to keep the refrigerant from flowing into the battery-side heat exchanger (31) in the defrosting operation (second operation). Specifically, reducing the opening degree of the pressure regulating valve (34) reduces the flow of the high-pressure refrigerant into the battery-side heat exchanger (31). Reducing the opening degree of the second expansion valve (33) reduces the flow of the refrigerant into the battery-side heat exchanger (31).

### (5-5) Fifth Variation

In a refrigeration apparatus (10) of a fifth variation, the controller (60) controls the refrigerant circuit (R), which is similar to that of the embodiment shown in FIG. 2, to perform a third operation as the defrosting operation. The third operation is an operation allowing the high-pressure refrigerant discharged from the compressor (12) to flow through the outdoor heat exchanger (13) for which the corresponding outdoor fan (14) is stopped, and through the internal heat exchanger (21) in this order. The third operation is a so-called regular cycle defrosting operation.

In the defrosting operation (third operation) of the refrigeration apparatus (10), the controller (60) operates the compressor (12) and the internal fan (22) and stops the outdoor fan (14) and the battery-side fan (32). The controller (60) fully opens the first expansion valve (23). The controller (60) closes the second expansion valve (33) and the pressure regulating valve (34).

In the third operation, the refrigerant discharged from the compressor (12) passes through the outdoor heat exchanger (13) and the first expansion valve (23), and then flows through the internal heat exchanger (21). In the internal heat exchanger (21), the high-pressure refrigerant dissipates heat to the surface of the internal heat exchanger (21). This melts the frost on the surface of the internal heat exchanger (21). The refrigerant that has passed through the internal heat exchanger (21) is sucked into the compressor (12).

The refrigerant circuit (R) of the fifth variation is configured to keep the refrigerant from flowing into the battery-side heat exchanger (31) in the defrosting operation (third operation). Specifically, reducing the opening degree of the second expansion valve (33) reduces the flow of the refrigerant into the battery-side heat exchanger (31). Reducing the opening degree of the pressure regulating valve (34) reduces the flow of the high-pressure refrigerant into the battery-side heat exchanger (31).

### (6) Other Embodiments

The embodiment and variations described above may be modified as follows.

The refrigeration apparatus (10) that has been applied to the vehicle (1) may be applied to any transportation such as railroad vehicles and airplanes. The refrigeration apparatus (10) is not necessarily applied to the transportation, and may be a stationary refrigeration apparatus. The refrigeration apparatus (10) may be an air conditioner for conditioning the air in a room.

The battery (B) may supply electric power to other devices than the refrigeration apparatus. For example, the battery (B) may supply the electric power to a driving device of the vehicle (1) or to an air conditioner that conditions the air in the driver's cab (2a).

The first utilization-side heat exchanger may be an air-conditioning heat exchanger that cools or heats the air in the driver's cab (2a).

The second utilization-side heat exchanger may adjust the temperature of an object other than the battery. The object may be an electric component such as a converter or a power device. The electric component is preferably provided in a power supply circuit of the refrigeration apparatus (10).

The first expansion mechanism is not necessarily an electronic expansion valve, and may be a thermal expansion valve or a capillary tube. The first expansion mechanism may be an expander that expands the refrigerant within a cylinder.

The second expansion mechanism is not necessarily an electronic expansion valve, and may be a thermal expansion valve or a capillary tube. The second expansion mechanism may be an expander that expands the refrigerant within a cylinder.

While the embodiments and variations thereof have been described above, it will be understood that various changes in form and details may be made without departing from the spirit and scope of the claims. The elements according to the embodiment, the variations thereof, and the other embodiments may be combined and replaced with each other.

### INDUSTRIAL APPLICABILITY

As can be seen in the foregoing description, the present disclosure is useful for a refrigeration apparatus.

### DESCRIPTION OF REFERENCE CHARACTERS

- 10: Refrigeration Device
- 12: Compressor
- 13: Outdoor Heat Exchanger (Heat-Source-Side Heat Exchanger)
- 17: Branch Point
- 21: Internal Heat Exchanger (First Utilization-Side Heat Exchanger)
- 23: First Expansion Valve (First Expansion Mechanism)
- 31: Battery-Side Heat Exchanger (Second Utilization-Side Heat Exchanger)
- 33: Second Expansion Valve (Second Expansion Mechanism)
- 34: Pressure Regulating Valve (Pressure Regulating Mechanism)
- 36: Bypass Channel
- 39: Check Valve
- 60: Controller
- B: Battery
- P1: First Pipe (First Refrigerant Channel)
- P2: Second Pipe (Second Refrigerant Channel)
- R: Refrigerant Circuit

## Claims

1. A refrigeration apparatus, comprising:
a refrigerant circuit (R) including
a compressor (12),
a heat-source-side heat exchanger (13) provided in series with the compressor (12),
a first refrigerant channel (P1) provided in series with the compressor (12) and the heat-source-side heat exchanger (13) and including a first expansion mechanism (23) and a first utilization-side heat exchanger (21), and
a second refrigerant channel (P2) provided in parallel with the first refrigerant channel (P1) and including a second expansion mechanism (33), a second utilization-side heat exchanger (31), and a pressure regulating mechanism (34); and
a control device (60) configured to control the second expansion mechanism (33) and the pressure regulating mechanism (34) to avoid frosting of the second utilization-side heat exchanger (31) under operating conditions in which the heat-source-side heat exchanger (13) functions as a radiator, the first utilization-side heat exchanger (21) and the second utilization-side heat exchanger (31) function as evaporators, and the first utilization-side heat exchanger (21) is possibly frosted.

2. The refrigeration apparatus of claim 1, wherein
the second utilization-side heat exchanger (31) adjusts a temperature of a battery (B).

3. The refrigeration apparatus of claim 1 or 2, wherein
the first utilization-side heat exchanger (21) cools air in a storage.

4. The refrigeration apparatus of any one of claims 1 to 3, wherein
the control device (60) is configured to control the refrigerant circuit (R) to perform a defrosting operation of melting frost on the first utilization-side heat exchanger (21) with a refrigerant in the refrigerant circuit (R), and
the refrigerant circuit (R) is configured to keep the refrigerant from flowing through the second utilization-side heat exchanger (31) in the defrosting operation.

5. The refrigeration apparatus of claim 4, wherein
the control device (60) is configured to control the refrigerant circuit (R) to perform, as the defrosting operation,
a first operation of allowing a high-pressure refrigerant discharged from the compressor (12) to bypass the heat-source-side heat exchanger (13) and flow into the first utilization-side heat exchanger (21), or
a second operation of allowing the high-pressure refrigerant discharged from the compressor (12) to dissipate heat in the first utilization-side heat exchanger (21) and evaporate in the heat-source-side heat exchanger (13), or
a third operation of allowing the high-pressure refrigerant discharged from the compressor (12) to flow through the heat-source-side heat exchanger (13) for which a corresponding fan (14) is stopped, and through the first utilization-side heat exchanger (21) in this order.

6. The refrigeration apparatus of claim 5, wherein
the control device (60) is configured to perform the first operation as the defrosting operation, and
the refrigerant circuit (R) includes a bypass channel (36) having one end connected to a discharge side of the compressor (12) and the other end connected to the first refrigerant channel (P1) between the first expansion mechanism (23) and the first utilization-side heat exchanger (21), the bypass channel (36) allowing the high-pressure refrigerant discharged from the compressor (12) to flow during the first operation.

7. The refrigeration apparatus of claim 6, wherein
the first refrigerant channel (P1) is provided with a check valve (39) arranged between a junction of the bypass channel (36) and the first refrigerant channel (P1) and a branch point (17) of the first refrigerant channel (P1) and the second refrigerant channel (P2) to block the refrigerant from flowing from the junction to the branch point (17).

8. The refrigeration apparatus of any one of claims 4 to 7, wherein
the control device (60) is configured to reduce an opening degree of a second expansion valve (33) serving as the second expansion mechanism (33) in the defrosting operation.

9. The refrigeration apparatus of any one of claims 4 to 8, wherein
the control device (60) is configured to reduce an opening degree of a pressure regulating valve (34) serving as the pressure regulating mechanism in the defrosting operation.

10. The refrigeration apparatus of any one of claims 1 to 10, wherein
the first expansion mechanism (23) is any one of an electronic expansion valve, a thermal expansion valve, or a capillary tube.
